# EUROPÄISCHE PATENTSCHRIFT

(11) **EP 1 572 506 B1**
(45) Veröffentlichungstag und Bekanntmachung des Hinweises auf die Patenterteilung: **30.08.2006**
(21) Anmeldenummer: 03813086.0
(22) Anmeldetag: 29.07.2003
(51) Int. Cl.: B60R 22/195

(54) **GURTSCHLOSS**
SEATBELT LOCK
BOUCLE DE CEINTURE DE SECURITE

(30) Priorität: 18.12.2002 DE 10259635
(43) Veröffentlichungstag der Anmeldung: 14.09.2005
(73) Patentinhaber: DaimlerChrysler AG, 70567 Stuttgart (DE)
(72) Erfinder: BACHMANN, Roland, 71065 Sindelfingen (DE); BAUMANN, Karl-Heinz, 71149 Bondorf (DE); FEHRING, Michael, 73765 Neuhausen (DE); JUSTEN, Rainer, 71155 Altdorf (DE); NILGEN, Nadja, 21075 Hamburg (DE); SCHÖNEBURG, Rodolfo, 72379 Hechingen (DE)
(86) Internationale Anmeldenummer: PCT/EP2003/008343
(87) Internationale Veröffentlichungsnummer: WO 2004/054853

(56) Entgegenhaltungen:
- EP-A- 0 711 687
- DE-A- 1 411 953
- DE-A- 10 001 312
- DE-A- 19 941 435
- DE-U- 20 209 965
- GB-A- 2 281 189
- US-A- 5 607 185
- US-A- 5 762 372
- US-B1- 6 460 935

## Beschreibung

Die Erfindung betrifft ein Gurtschloss mit einer präventiven Straffeinrichtung gemäß dem Oberbegriff des Patentanspruchs 1, wie es aus der DE-A-19 941 435 bekannt ist.

Aus der DE 199 61 799 A1 ist ein Gurtschloss mit einer präventiven Straffeinrichtung ausgestattet ist. Wird eine kritische Fahrsituation sensiert, bringt ein E-Motor das Gurtschloss für ca. 5 Sekunden in eine abgesenkte Zwischenstellung. In der Zwischenstellung wirkt ein Kraftspeicher der Rückzugsrichtung des E-Motors entgegen, so dass bei nicht eingetretenem Crash der Kraftspeicher das Gurtschloss von der Zwischenstellung in die Betriebsstellung zurückführt. Kommt es zu einem Crash, wird die präventive Straffeinrichtung pyrotechnisch betätigt, um höhere Rückhaltekräfte zu gewährleisten.

Nachteilig dabei ist, dass nach einem Crash der Kraftspeicher gegen die Rückzugskraft der pyrotechnischen Straffeinrichtung wirkt, so dass Verriegelungen für den Kraftspeicher notwendig sind. D.h. das Gurtschloss muss ab einer Gegenkraft am Gurtschloss, die größer als die Straffkraft ist, verriegeln.

Aufgabe der Erfindung ist es daher, ein Gurtschloss mit einer präventiven Straffeinrichtung zu schaffen, dessen Rückhaltekraft über den gesamten Crashverlauf nahezu konstant bleibt.

Erfindungsgemäß entsprechend den Maßnahmen des Anspruchs 1 ist eine präventive Straffeinrichtung vorgesehen, mit der ein Gurtschloss durch einen unter Vorspannung gehaltenen Kraftspeicher von einer Betriebsstellung in eine abgesenkte Sicherheitsstellung überführbar ist. Die Rückstellung von der Sicherheitsstellung in die Betriebsstellung erfolgt durch eine Antriebseinheit, die aktiviert wird, wenn kein Unfall stattgefunden hat. Die reversible Anordnung hat den Vorteil, dass durch den Kraftspeicher eine hohe Straffgeschwindigkeit des Gurtschlosses zur Verfügung gestellt werden kann, so dass Gurtlose aus dem Gurtsystem in einer kritischen Fahrsituation innerhalb kürzester Zeit entfernt werden. Die Antriebseinheit kann, wenn sie klein dimensioniert ist, mit einem großen Übersetzungsgetriebe verbunden sein, um die für das Rückstellen des Gurtschlosses notwendige Kraft zu erzeugen.

Die Straffeinrichtung kann derart ausgebildet sein, dass das Gurtschloss zusätzlich von der Betriebsstellung in eine gegenüber der Betriebsstellung erhabene Komfortstellung bewegbar ist. Das hat den Vorteil, dass trotz der insbesondere bei Fondsitzen üblichen, versenkten Anordnung des Gurtschlosses die Erreichbarkeit des Gurtschlosses unter Beibehaltung der präventiven Sicherheitsfunktion verbessert wird. Die Straffeinrichtung erfüllt demnach gleichzeitig die Funktion eines Gurtschlossbringers. Von Vorteil dabei ist, dass das Gurtschloss bereits in seiner Betriebsstellung bezüglich des Sitzkissens sehr tief liegend angeordnet werden kann, was die Rückhaltewirkung des Gurtsystems grundsätzlich verbessert, da der Gurtverzweigungspunkt zwischen Becken- und Schultergurt möglichst tief angeordnet werden soll.

Eine kostengünstige Ausführungsform besteht darin, wenn die Antriebseinheit neben der Rückstellung des Gurtschlosses von der Sicherheitsstellung in die Betriebsstellung gleichzeitig dafür ausgelegt ist, das Gurtschloss von der Betriebsstellung in die Komfortstellung zu überführen.

In einer einfachsten Ausführungsform kann der Kraftspeicher als Druckfeder ausgebildet sein, die unter Vorspannung in einem Gehäuse gehalten und über ein Zugseil mit dem Gurtsschloss verbunden ist. Bei einer detektierten kritischen Fahrsituation wird die Druckfeder aktiviert, so dass diese sich in dem Gehäuse ausdehnt und über das Zugseil das Gurtschloss mitnimmt. Möglich ist jedoch auch, einen hydraulischen oder pneumatischen Kraftspeicher einzusetzen.

An dem Gurtschloss kann in einer Ausführungsform eine Zahnstange befestigt sein, die von einem korrespondierenden Zahnrad der Antriebseinrichtung angetrieben wird.

Als Antriebseinheit kann ein ohnehin vorhandener Elektromotor genutzt werden. Beispielsweise der Elektromotor, der eine Sitzverstellung antreibt.

Denkbar ist auch, dass die Antriebseinheit eine hydraulische Pumpe ist.

Um das Gurtschloss in die Sicherheitsstellung oder in die Komfortstellung zu überführen, ist eine Umlenkeinheit vorgesehen. Diese Umlenkeinheit umfasst eine Welle mit einer Nockenbahn, in die eine Klinke eingreift. Je nachdem, ob die Klinke in Eingriff steht oder nicht, wird die Welle blockiert oder freigegeben.

Des weiteren kann ein Sperrrad mit einer Nutbahn vorgesehen sein, das ebenfalls mit der Klinke in Eingriff steht.

Wird eine kritische Fahrsituation detektiert, wird die Druckfeder freigegeben, so dass das Zugseil das Sperrrad antreibt. Der Eingriff zwischen Klinke und Nutbahn ist geometrisch so gestaltet, dass bei einem präventiven Straffvorgang die Klinke über den Eingriff mit der Nutbahn rutscht. Das hat zur Folge, dass das Sperrrad seine Bewegung auf die Welle überträgt.

Folgt der kritischen Fahrsituation kein Crash, wird durch den Motor die Welle mit Nockenbahn in entgegengesetzter Richtung an getrieben und die Feder dadurch wieder gespannt. Das geht jedoch nur, wenn die Klinke nicht in Eingriff mit der Nockenbahn steht.

Kommt es zu einem Crash, wirken hohe Zugkräfte auf das Gurtschloss. Dadurch wird das Sperrrad angetrieben und zwar so, das die Synchronisierung zwischen Nockenbahn und Nutbahn aufgehoben wird. Die Klinke gelangt in Eingriff und verhindert so, dass die Feder durch die hohen Zugkräfte gespannt wird.

Um zu gewährleisten, dass das Gurtschloss in jeder Lage verriegelt, sobald die Zugkraft am Gurtschloss größer ist als die Straffkraft, ist eine Synchronisiereinheit vorgesehen. Die Synchronisiereinheit umfasst in einer Ausführungsform Verriegelungssteine innerhalb des Gehäuses für die Feder gegeneinander verdrehbar gelagert sind.

Vorteilhafterweise sind die Stirnseiten der Verriegelungssteine als Zahnflanken ausgebildet, um einen Antrieb für die Drehbewegung eines Verriegelungssteins innerhalb des Gehäuses zu realisieren.

In einer zweiten Ausführung sind Spiralnaben auf einer Welle angeordnet, wobei durch Verschiebung der Spiralnaben zueinander ein Drehmoment auf ein Sperrrad übertragbar ist.

Bevorzugte Ausführungsformen sind in der Zeichnung dargestellt. Dabei zeigen:
- Fig. 1: eine Ausführungsform eines Gurtschlosses,
- Fig. 2: eine zweite Ausführungsform eines Gurtschlosses,
- Fig. 3: einen Querschnitt entlang der Linie III-III gemäß Fig. 2,
- Fig. 4: eine Detailansicht einer Halte- und Auslöseeinheit gemäß Fig. 3,
- Fig. 5: eine dritte Ausführungsform eines Gurtschlosses in Reversierstellung sowie
- Fig. 6: das Gurtschloss nach Fig. 5 in Straffstellung.

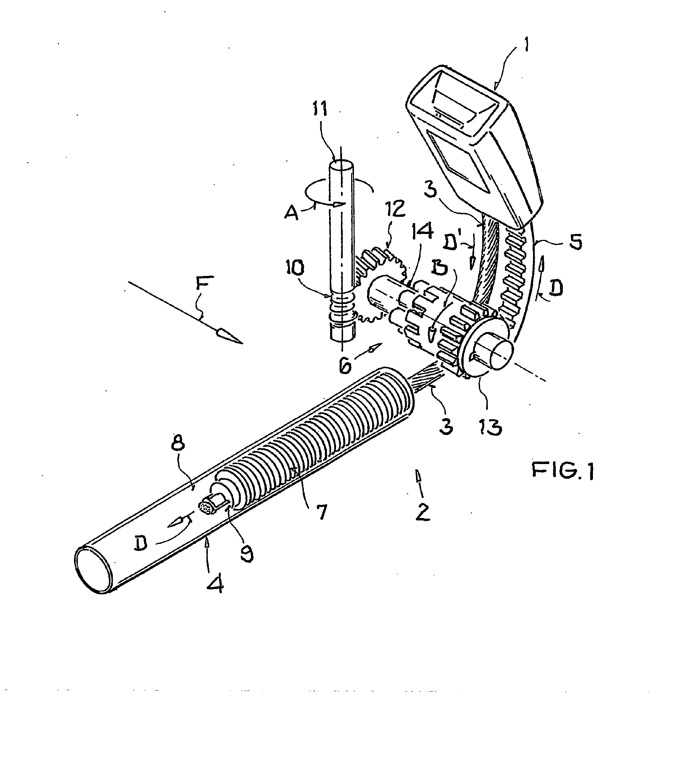

In Fig. 1 ist ein Gurtschloss 1 mit einer Straffeinrichtung 2 in einer perspektivischen Ansicht schräg von vorn dargestellt, wobei die Fahrtrichtung F mittels Pfeil eingezeichnet ist. Das Gurtschloss 1 befindet sich in Betriebsstellung.

Das Gurtschloss 1 ist über ein Zugseil 3 mit einem Kraftspeicher 4 und über eine Zahnstange 5 mit einer Antriebseinheit 6 der Straffeinrichtung 2 verbunden.

Der Kraftspeicher 4 umfasst eine Druckfeder 7, die in einem Gehäuse 8 geführt und unter Vorspannung in dem Gehäuse 8 gehalten ist. Die Druckfeder 7 wird von dem Zugseil 3 durchsetzt, wobei das Zugseil 3 an dem dem Gurtschloss 1 abgewandten Ende 9 der Druckfeder 7 befestigt ist.

Die Antriebseinheit 6 ist lediglich mit einem Übersetzungsgetriebe 10 dargestellt, das eine Antriebswelle 11, ein Schneckenrad 12 sowie ein Sperrrad 13 umfasst. Schneckenrad 12 und Sperrrad 13 sind auf einer gemeinsamen Welle 14 gelagert. Das Sperrrad 13 ist mit der Zahnstange 5 in Eingriff.

Im Folgenden wird das Zusammenwirken des Gurtschlosses 1 mit der Straffeinrichtung 2 anhand der möglichen Belastungsfälle erläutert. Mögliche Belastungsfälle sind die Komfortverstellung, die Verstellung bei einer kritischen Fahrsituation sowie das Verstellen bei einem Crash.

Um das Gurtschloss 1 von seiner dargestellten Betriebsstellung in eine demgegenüber erhabene Komfortstellung zu überführen kann beispielsweise beim Starten des Motors und gleichzeitiger Erkennung der Sitzbelegung ein Signal an die Antriebseinheit 6 gegeben werden, so dass die Antriebswelle 11 durch Rotation gemäß Pfeilrichtung A das Schneckenrad 12 bzw. das Sperrrad 13 in Pfeilrichtung B antreibt. Durch den Eingriff des Sperrrad 13 mit der Zahnstange 5 erhält die Zahnstange 5 einen Vortrieb in Richtung C, so dass das Gurtschloss 1 über die Betriebsstellung hinaus angehoben wird. Der Verfahrweg des Gurtschlosses 1 zu Komfortzwecken kann beliebig gewählt werden. In der dargestellten Ausführung ist ein Verfahrweg bis zu 80 mm möglich.
Nach dem Einstecken der nicht dargestellten Gurtzunge in das Gurtschloss 1 erhält die Antriebseinheit 6 wiederum ein Signal. Der Bewegungsablauf erfolgt in umgekehrter Reihenfolge bis sich das Gurtschloss wieder in seiner Betriebsstellung befindet.

Wird durch entsprechende Sensorik eine kritische Fahrsituation detektiert, erhält eine nicht weiter dargestellte Auslösemechanik am Kraftspeicher 4 ein Signal, so dass eine Entspannung der Druckfeder 7 in Pfeilrichtung D erfolgt. Durch die Befestigung des Zugseils 3 am Ende 9 der Druckfeder 7 wird das Gurtschloss 1 entsprechend mitgenommen, so dass das Gurtschloss 1 in eine abgesenkte Sicherheitsstellung gemäß Pfeilrichtung D' bewegt wird. Da das Gurtschloss Gurtverzweigungspunkt von Becken- und Schultergurt ist, wird etwa die doppelte Länge des Verfahrweges aus dem Gurtsystem gezogen und die Gurtlose somit bereits zu einem sehr frühen Zeitpunkt aus dem Gurtsystem entfernt. Kommt es zu keinem Unfall wird ein Signal an die Antriebseinrichtung 6 gegeben, die das Gurtschloss 1 wieder in die Betriebsstellung in der oben beschriebenen Weise anhebt.

Im Crashfall wird das Gurtschloss 1 durch das Sperrrad 13 in der Sicherheitsstellung gehalten, wobei die crashaktive Gurtstraffung pyrotechnisch am Gurtaufroller erfolgen kann. Der Gurtaufroller kann durch einen gurtsensitiven Sensor und durch einen fahrzeugsensitiven Sensor gesperrt werden.

Die Gurtstraffung erfolgt nun durch die präventive Straffung auf Basis der Fahrdynamik oder Fahrzeugumfeldbewertung. Ab einer kritischen Schwelle wird das Gurtschloss gestrafft, wobei die durch das Gurtschloss am Gurtaufroller induzierte Beschleunigung des Gurtbandmaterials so groß sein muss, dass der gurtsensitive Sensor den Gurtaufroller sperrt, um die Gurtlose am Insassen zu reduzieren. Der Schwellwert hierfür liegt bei 2 g am Gurtaufroller. Im Gegensatz dazu wird der Gurtaufroller vom fahrzeugsensitiven Sensor bereits ab einer Fahrzeugbeschleunigung (in X/Y-Ebene) von 0,3 g gesperrt. Die Sperrung des Gurtes am Gurtaufroller durch den fahrzeugsensitiven Sensor kann aufgrund der Fahrdynamik bereits vor der Sperrung durch den gurtsensitiven Sensor erfolgen und ermöglicht somit, zusätzliche Gurtlose am Insassen zu reduzieren.

Die Bezugszeichnen in den folgenden Figuren sind bei gleicher Bau- bzw. Wirkungsweise analog zu den Bezugszeichen in Fig. 1.

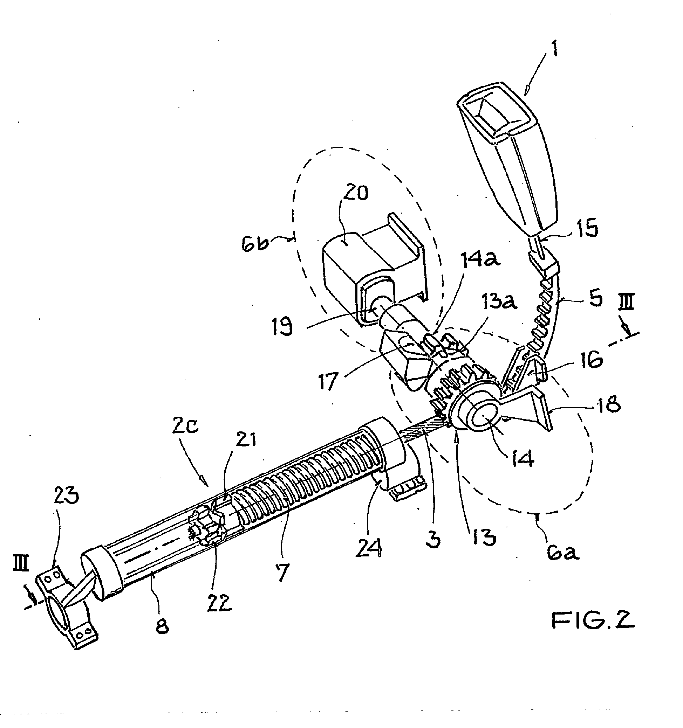

Aus Fig. 2 geht ein herkömmliches Gurtschloss 1 hervor, dass über ein flexibles Stahlkabel 15 mit der gebogenen Zahnstange 5 befestigt ist. Diese Zahnstange 5 wird über eine Linearführung 16 am Sitzgestell (hier nicht dargestellt) gehalten. Die Linearführung 16 hat die Aufgabe die Zahnstange 5 und somit dem Gurtschloss 1 die Bewegungsfreiheit in Z-Richtung zu ermöglichen.

An der Zahnstange 5 greift das Sperrrad 13 an. Auf diesem Sperrrad 13 ist außenseitig eine Nutbahn 13a ausgebildet. An dieser Oberfläche ist eine federbelastete Klinke 17 im Eingriff. Das flexible Zugseil 3 verbindet das Sperrrad 13 mit der Feder 7. Das Sperrrad 13 ist auf einer Welle 14 gelagert. Die Welle 14 ist mittels einer Lagerung 18 und über eine Motorwelle 19 am Sitzgestell befestigt. Auf der Welle 14 ist eine Nockenbahn 14a dargestellt. Auch an dieser Nockenbahn 14a ist die federbelastete Klinke 17 im Eingriff. Am Ende der Motorwelle 19 treibt ein Motor (20) die Welle (14) an.

Im Gehäuse 8 befindet sich die Feder 7 sowie Verriegelungssteine 21 und 22. Das Gehäuse 8 ist über die Befestigungshülsen 23 und 24 am Sitzquerrohr (hier nicht dargestellt) befestigt.

Prinzipiell lässt sich das Gurtschloss mit präventiver Straffeinrichtung unterteilen in die Antriebseinheit 6 mit einer Umlenkeinheit 6a und einer Reversiereinheit 6b sowie in die Straffeinrichtung 2.

Die Umlenkeinheit 6a umfasst das Sperrrad 13, die Welle 14, die Klinke 17 sowie das Zugseil 3.

Die Reversiereinheit 6b umfasst den Motor 20 sowie die Motorwelle 19.

Die Straffeinrichtung 2 umfasst Gehäuse 8, die Feder 7, eine Federverriegelung 2a sowie Befestigung 2b (Befestigungshülsen 23 und 24).

Ein Vorteil dieser Ausführungsform ist die Verwendung des Speichers mit hoher Energiedichte (Feder 7) für den Straffvorgang und ein Energiespeicher mit geringer Energiedichte (Motor 20) für den langsamen Reversiervorgang. Hierdurch ergibt sich ein Package- und Gewichtsvorteil.

Die Straffeinrichtung 2 ist in dieser Ausführungsform nicht an den Sitz, sondern in den Sitz eingebaut. Die verteilte Anordnung der einzelnen Baugruppen wurde aus Gründen der optimalen Aufteilung der Bauteile in die freien Lücken der Sitzeinheit gewählt. Bei anderen Sitzanordnungen ist aber auch eine abweichende Aufteilung denkbar.

Die Haltefunktion der Feder 7 und die Haltefunktion des Gurtschlosses 1 wurden aus Gründen der unterschiedlichen Anforderungen getrennt. Die Feder muss in dieser Ausführungsform ca. 300-400N Kraft aufbringen, um den Gurt präventiv zu straffen.

Demnach auch nur mit dieser Kraft gehalten werden. Das Gurtschloss muss aufgrund der hohen dynamischen Belastungen im Crashfalle und den daraus resultierenden gesetzlichen Anforderungen einer Haltekraft von 19 kN genügen.

Aus diesem Grund wird die Feder 7 nur in ihrer Endlage, in der sie betriebsbereit für den Straffvorgang ist, verriegelt bzw. zur Straffung entriegelt.

Um zu gewährleisten, dass das Gurtschloss in jeder Lage verriegelt, sobald die Zugkraft am Schloss größer ist als die Straffkraft, wurde eine der Straffeinrichtung zugeordnete Synchronisiereinheit 2c zur Verriegelung konzipiert.

Diese Verriegelung auch im laufenden Straffvorgang, also nicht nur in den Endlagen ist nötig, da eine zeitgerechte Auslösung des reversiblen Gurtschlossstraffens nicht in allen Situationen gewährleistet werden kann. So können sich zum Beispiel der Straffvorgang und die beginnende Vorverlagerung des Insassen überlagern. Dies würde bedeuten, dass das Gurtschloss 1 seine geplante Endlage und die dort angeordnete Verriegelungseinheit nicht erreicht, der gesamte präventiv gestraffte Weg des Gurtschlosses 1 würde somit wieder freigegeben.

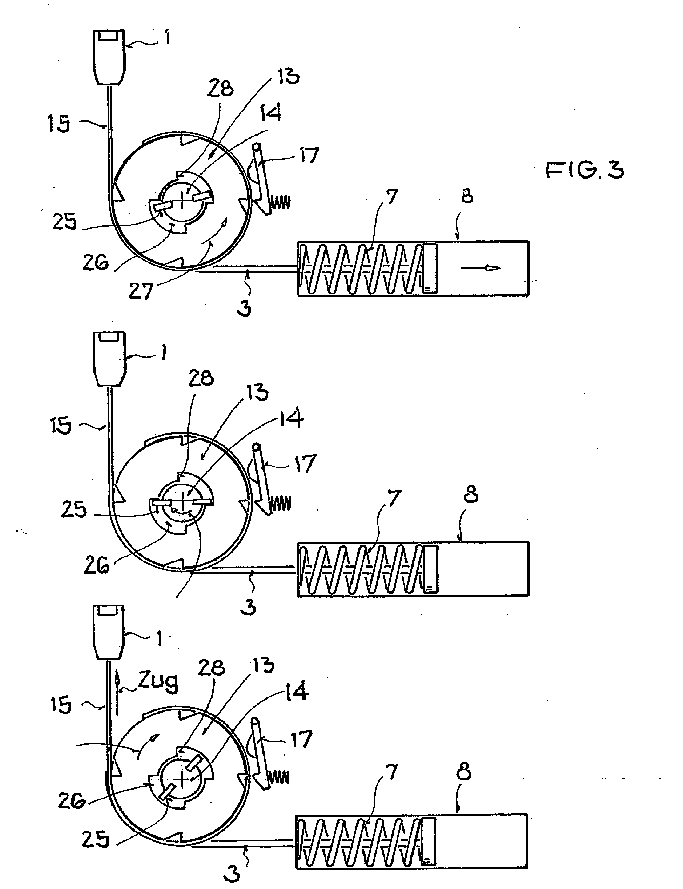

In Fig. 3 wird der Aufbau der Umlenkeinheit 6a bzw. der Reversiereinheit 6b näher erläutert.

Die Welle 14 ist mit der Nockenbahn 14a dargestellt, während das Sperrrad 13 die Nutbahn 13a umfasst. Die federbelastete Klinke 17 ist sowohl mit der Nocken- als auch der Nutbahn im Eingriff. Auf der Welle 14 befindet sich eine Längsfeder 25. Das Sperrrad 13 ist innenseitig mit einer Winkelnut 26 versehen. Diese Winkelnut 26 erlaubt dem Sperrrad 13 gegenüber der Welle 14 zwei Betriebsstellungen, um ca. 90° verdreht, je nach dem an welchem Anschlag 27 oder 28 sich die Längsfeder 25 an der Winkelnut 26 befindet.

Die Arbeitsweise der Umlenkeinheit 6a bzw. Reversiereinheit 6b stellt sich in den einzelnen Betriebszuständen wie folgend dar:

Beim Straffvorgang, d.h. bei einer kritischen Fahrsituation, zieht die Feder 7 Gurtschloss 1 ein. Die Klinke 17 verrastet nicht, sondern rutscht geometriebedingt über den Eingriff mit der Nutbahn 13a. Das Sperrrad 13 dreht die Welle 14 linksdrehend mit. Es befinden sich die Anschläge 27 im Eingriff.

Beim Reversiervorgang, d.h. es hat kein Unfall stattgefunden, wird das Gurtschloss 1 durch Drehung der Welle 14 wieder ausgefahren und die Feder 7 dadurch wieder gespannt. Die Klinke 17 überspringt dabei den Eingriff, angesteuert durch die Nockenbahn 14a auf der Welle 14. Es befinden sich die Anschläge 27 im Eingriff.

Bei einem plötzlichen Zug am Gurtschloss, beispielsweise bei einem Unfall, dreht sich das Sperrrad 13 auf der Welle 14 bis zu den Anschlägen 28 durch, so dass die Synchronisierung zwischen Nockenbahn 14a und Nutbahn 13a aufgehoben wird. Die Klinke 17 rastet ein, der Motor stoppt.

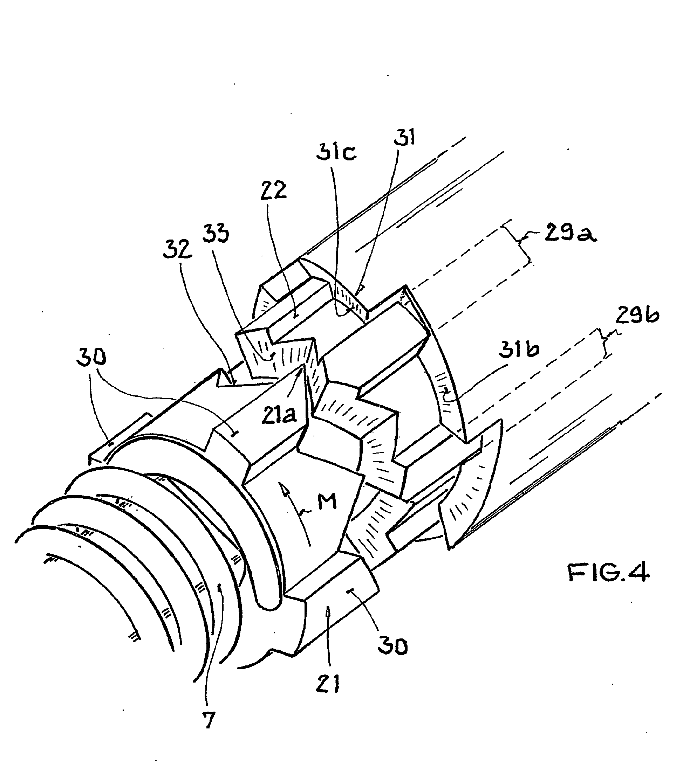

Fig. 4 zeigt die Auslöseeinheit 2c in einer Detailansicht.

Die Feder 7 wird über die Auslöseeinheit gehalten bzw. ausgelöst und ist bei dieser Ausführung separat umgesetzt. Zur Erzeugung eines Auslöseimpulses wird der Motor 20 genutzt. Hierzu wurde die Auslöseeinheit 2c an einem Federende in der Art eines Kugelschreibermechanismus integriert. Dies ermöglicht die Auslösung zur Straffung und den Reversiervorgang mit nur einer Motordrehrichtung. Die entgegengesetzte Drehrichtung kann für eine zusätzliche Komfortanwendung, z.B. für das Ausfahren des Gurtschlosses 1 als Schlosszubringer genutzt werden.

Eine Verwendung dieser Auslöseeinheit 2c ist jedoch nicht zwingend notwendig. Bedarf es keiner Nutzung der zweiten Motordrehrichtung für Komfortzwecke so kann diese dazu verwendet werden, die Auslöseklinke anzusteuern.

Das flexible Zugseil 3 überträgt die Kraft der Feder 7 über die Verriegelungssteine 21 und 22. Am Verriegelungsstein 22 ist das flexible Zugseil 3 befestigt. Im Federgehäuse 8 sind in diesem Ausführungsbeispiel insgesamt sechs Nuten 29 dargestellt, wobei jeweils drei Nuten tiefer (29a) und drei Nuten höher (29b) ausgearbeitet sind. Die Nuten 29a und 29 b sind jeweils abwechselnd über den Umfang angeordnet. Der Verriegelungsstein 21 ist vom Durchmesser her so dargestellt, dass er in die Nuten 29a und 29b versenkt werden kann. D.h. der Verriegelungsstein 21 wird immer im Nutbereich geführt. Der Verriegelungsstein 21 weist umfangsseitig Federn 30 auf, die von den Abmaßen her so dargestellt sind, dass sie nur in die tief ausgearbeiteten Nuten 29a eintauchen können.

Der Verriegelungsstein 21 wird zur Erreichung der Endstellung über die Übergangsgrenze 31 aus dem Nutbereich heraus gezogen. Die sich berührenden Stirnseiten 32 und 33 der beiden Verriegelungssteine 21 und 22 sind als Zahnflanken ausgebildet. Diese Anordnung dient zum Antrieb der notwendigen Drehbewegung des Verriegelungssteins 21.

In der Ruhestellung befindet sich Verriegelungsstein 21 an der Übergangsgrenze 31 und zwar mit der Spitze 21a des Verriegelungssteins 21 an der Kerbe 31c der Übergangsgrenze 31 an der Nut 29b. Die Stirnseiten 32 und 33 der beiden Verriegelungssteine 21 und 22 stehen in dieser Stellung so aufeinander, dass ein Drehmoment M auf den Verriegelungsstein 21 wirkt. Eine Verdrehung wird durch die Fläche 31b an der Übergangsgrenze 31 verhindert.

Wird der Verriegelungsstein 21 nun über die Übergangsgrenze 31 nach links gezogen, so verdreht das wirkende Moment M diesen gegenüber dem fixierten Verriegelungsstein 22, sobald der Verriegelungsstein 21 nicht mehr von Fläche 31b blockiert wird. Wird Verriegelungsstein 22 losgelassen, so verdrehen die Flächen 31c den Verriegelungsstein 21 so, dass er in die Nut 29a gleitet und nicht mehr blockiert wird.

Somit ist der Straffvorgang eingeleitet; die Feder kann entspannen. In dieser Stellung wirk nun wieder das Moment M, welches den Verriegelungsstein 21 verdrehen will, jedoch durch die Nut 29a blockiert wird. Wird die Feder 7 nun so gespannt, dass der Verriegelungsstein 21 über die Übergangsgrenze 31 nach links gezogen wird, verdreht sich Verriegelungsstein 22 erneut und das System gelangt in die Ruhestellung.

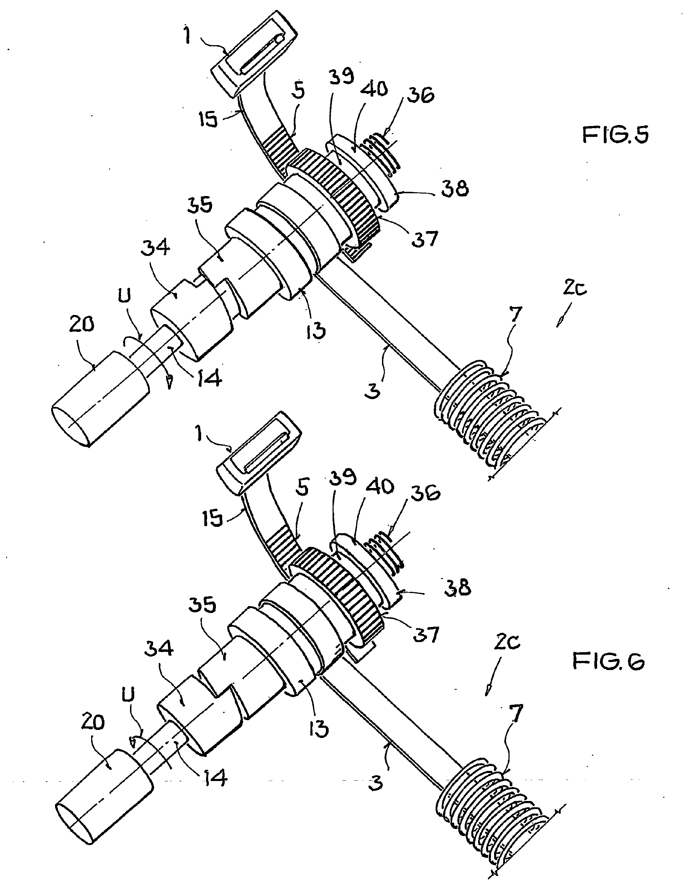

Die Fig. 5 und 6 zeigen eine alternative Lösung, die nicht Gegenstand der Ansprüche ist, für die Synchroniereinheit 2c, die hier nicht im Gehäuse 8 sondern im Bereich der Umlenkeinheit 6a angeordnet ist.

Gleiche Bezugsziffern bezeichnen wiederum gleiche Bauteile.

Diese alternative Bauweise sieht eine Einheit vor, die zwei Spiralnaben 34 und 35, eine Federeinheit 36, eine Stiftscheibe 37 sowie eine Lochscheibe 38 vor.

In Fig. 5 überlappen sich die beiden Spiralnaben 34 und 35 an gezeigter Stelle. Dies hat zur Folge, dass die Federeinheit 36 zusammengedrückt ist und dass sich Nuten 39 der Stiftscheibe 37 im Eingriff mit Öffnungen 40 in der Lochscheibe 38 befinden.

Erfolgt nun eine Auslösung durch Drehung des Elektromotors 20 im Uhrzeigersinn U, so springen nach der Drehung über die dargestellte, senkrechten Flanke die Spiralnaben 34 und 35 durch den Druck der Federeinheit 36 zusammen. Dies führt dazu, dass die Stiftscheibe 37 aus der Lochscheibe 38 springt und diese frei gibt, so dass die Feder 7 das Sperrrad 13 auf der Welle 14 dreht. Das drehende Sperrrad 13 spannt dadurch das Gurtschloss 1.

Hierbei dreht sich die Welle 14 entgegengesetzt zum Uhrzeigersinn U und zwar um maximal 270° so, das die beiden Spiralnaben 34 und 35 nicht wieder axial verspannt werden.

Erfolgt ein Reversiervorgang durch eine Drehung des Elektromotors im Uhrzeigersinn, so werden sich die Schrägen der beiden Spiralnaben 34 und 35 gegenüber der Stiftscheibe 37 und der Lochscheibe 38 so verspannen, dass das Gurtschloss 1 reversiert wird, und zwar so lange, bis die Stiftscheibe 37 wieder in die Lochscheibe 38 eingreift. Der Ausgangszustand ist somit wieder hergestellt.

## Patentansprüche

1. Gurtschloss mit einer präventiven Straffeinrichtung, die das Gurtschloss von einer Betriebsstellung in eine demgegenüber abgesenkte Sicherheitsstellung bewegt und die einen Kraftspeicher und eine Antriebseinheit umfasst, dass das Gurtschloss (1) in Betriebsstellung durch den Kraftspeicher (4) unter Vorspannung gehalten ist, wobei die Antriebseinheit (6) das Gurtschloss (1) von der Sicherheitsstellung in die Betriebsstellung rücküberführt,
**dadurch gekennzeichnet,**
**dass** die Antriebseinheit (6) der Straffeinrichtung (2) das Gurtschloss (1) von seiner Betriebsstellung in eine gegenüber der Betriebsstellung erhabene Komfortstellung bewegt.

2. Gurtschloss nach Anspruch 1,
**dadurch gekennzeichnet,**
**dass** der Kraftspeicher (4) eine Druckfeder (7) ist, die über ein Zugseil (3) mit dem Gurtsschloss (1) verbunden ist.

3. Gurtschloss nach Anspruch 1,
**dadurch gekennzeichnet,**
**dass** an dem Gurtschloss (1) eine Zahnstange (5) befestigt ist, die mit einem korrespondierenden Abtriebsrad (13) der Antriebseinheit (6) zusammenwirkt.

4. Gurtschloss nach einem der Ansprüche 1 oder 3,
**dadurch gekennzeichnet,**
**dass** die Antriebseinheit (6) ein Elektromotor ist, der eine elektromotorische Sitzverstellung antreibt.

5. Gurtschloss nach einem der Ansprüche 1 oder 3,
**dadurch gekennzeichnet,**
**dass** die Antriebseinheit (6) eine hydraulische Pumpe ist.

6. Umlenkeinheit eines Gurtschlosses mit einer präventiven Straffeinrichtung, wobei das Gurtschloss nach einem der Ansprüche 1 bis 5 ausgebildet ist,
**dadurch gekennzeichnet,**
**dass** eine Welle (14) mit einer Nockenbahn (14a) vorgesehen ist, das mit einer Klinke (17) in Eingriff steht und ein Sperrrad (13) mit einer Nutbahn (13a) vorgesehen ist, das mit der Klinke (17) in Eingriff steht, wobei das Sperrrad (13) zwischen zwei Betriebsstellungen auf der Welle drehbar ist.

7. Umlenkeinheit nach Anspruch 6,
**dadurch gekennzeichnet,**
**dass** bei einem präventiven Straffvorgang die Klinke (17) nicht in Eingriff mit der Nutbahn (13a) steht.

8. Umlenkeinheit nach Anspruch 6,
**dadurch gekennzeichnet,**
**dass** bei einem Reversiervorgang die Klinke (17) nicht in Eingriff mit der Nockenbahn (14a) steht.

9. Umlenkeinheit nach einem der Ansprüche 6 bis 8,
**dadurch gekennzeichnet,**
**dass** bei hohen Zugkräften am Gurtschloss (1) das Sperrrad (13) bis zu Anschlägen (28) auf der Welle (14) verdrehbar ist.

10. Synchronisiereinheit eines Gurtschlosses mit einer präventiven Straffeinrichtung zur Steuerung von Straff-, Reversier-und Verriegelungsvorgängen, wobei das Gurtschloss nach einem der Ansprüche 1 bis 5 ausgebildet ist,
**dadurch gekennzeichnet,**
**dass** Verriegelungssteine (21, 22) innerhalb eines Gehäuses (8) für eine Feder (7) gegeneinander verdrehbar gel a-gert sind.

11. Synchronisiereinheit nach Anspruch 10,
**dadurch gekennzeichnet,**
**dass** die Stirnseiten (32, 33) der Verriegelungssteine (21, 22) als Zahnflanken ausgebildet sind.

## Claims

1. Seatbelt lock having a preventive tensioning device which moves the seatbelt lock from an operating position into a lowered safety position with respect to the operating position and which comprises an energy accumulator and a drive unit, in that the seatbelt lock (1) is maintained preloaded in the operating position by means of the energy accumulator (4), the drive unit (6) transferring the seatbelt lock (1) from the safety position back into the operating position, **characterized in that** the drive unit (6) of the tensioning device (2) moves the seatbelt lock (1) from its operating position into a raised comfort position with respect to the operating position.

2. Seatbelt lock according to Claim 1, **characterized in that** the energy accumulator (4) is a compression spring (7) which is connected to the seatbelt lock (1) via a draw-in cable (3).

3. Seatbelt lock according to Claim 1, **characterized in that** a rack (5) is fastened to the seatbelt lock (1) and interacts with a corresponding driven gear (13) of the drive unit (6).

4. Seatbelt lock according to either of Claims 1 and 3, **characterized in that** the drive unit (6) is an electric motor which drives an electric motor-operated seat adjuster.

5. Seatbelt lock according to either of Claims 1 and 3, **characterized in that** the drive unit (6) is a hydraulic pump.

6. Deflection unit of a seatbelt lock having a preventive tensioning device, the seatbelt lock being designed according to one of Claims 1 to 5, **characterized in that** a shaft (14) is provided with a cam track (14a) which is in engagement with a catch (17) and a ratchet gear (13) is provided with a grooved track (13a) which is in engagement with the catch (17), the ratchet gear (13) being able to rotate on the shaft between two operating positions.

7. Deflection unit according to Claim 6, **characterized in that** the catch (17) is not in engagement with the grooved track (13a) during a preventive tensioning operation.

8. Deflection unit according to Claim 6, **characterized in that** the catch (17) is not in engagement with the cam track (14a) during a reversing operation.

9. Deflection unit according to one of Claims 6 to 8, **characterized in that**, when there are high tensile forces on the seatbelt lock (1), the ratchet gear (13) can be rotated as far as stops (28) on the shaft (14).

10. Synchronizing unit of a seatbelt lock having a preventive tensioning device for controlling tensioning, reversing and locking operations, the seatbelt lock being designed according to one of Claims 1 to 5, **characterized in that** locking blocks (21, 22) are mounted so that they can be rotated relative to one another within a housing (8) for a spring (7).

11. Synchronizing unit according to Claim 10, **characterized in that** the end faces (32, 33) of the locking blocks (21, 22) are designed as tooth flanks.

## Revendications

1. Boucle de ceinture de sécurité comprenant un dispositif tendeur préventif, qui déplace la boucle de ceinture de sécurité d'une position de fonctionnement à une position de sécurité abaissée par rapport à celle-ci et qui comprend un accumulateur d'énergie et une unité d'entraînement, la boucle de ceinture de sécurité (1) étant maintenue par précontrainte dans la position de fonctionnement par l'accumulateur d'énergie (4), l'unité d'entraînement (6) ramenant la boucle de ceinture de sécurité (1) de la position de sécurité à la position de fonctionnement,
**caractérisée en ce que**
l'unité d'entraînement (6) du dispositif tendeur (2) déplace la boucle de ceinture de sécurité (1) de sa position de fonctionnement à une position de confort rehaussée par rapport à la position de fonctionnement.

2. Boucle de ceinture de sécurité selon la revendication 1,
**caractérisée en ce que**
l'accumulateur d'énergie (4) est un ressort de compression (7) qui est connecté par le biais d'un câble de traction (3) à la boucle de ceinture de sécurité (1).

3. Boucle de ceinture de sécurité selon la revendication 1,
**caractérisée en ce**
**qu'**une crémaillère (5) est fixée à la boucle de ceinture de sécurité (1), laquelle coopère avec une roue d'entraînement de sortie (13) correspondante de l'unité d'entraînement (6).

4. Boucle de ceinture de sécurité selon l'une quelconque des revendications 1 ou 3,
**caractérisée en ce que**
l'unité d'entraînement (6) est un moteur électrique qui entraîne un réglage du siège par moteur électrique.

5. Boucle de ceinture de sécurité selon l'une quelconque des revendications 1 ou 3,
**caractérisée en ce que**
l'unité d'entraînement (6) est une pompe hydraulique.

6. Unité de déviation d'une boucle de ceinture de sécurité comprenant un dispositif tendeur préventif, la boucle de ceinture de sécurité étant réalisée selon l'une quelconque des revendications 1 à 5,
**caractérisée en ce que**
l'on prévoit un arbre (14) avec une piste de came (14a), qui est en prise avec un cliquet (17), et **en ce qu'**une roue de blocage (13) est pourvue d'une piste de rainure (13a), et est en prise avec le cliquet (17), la roue de blocage (13) pouvant tourner entre deux positions fonctionnelles sur l'arbre.

7. Unité de déviation selon la revendication 6,
**caractérisée en ce que**
dans le cas d'une opération de tensionnement préventive, le cliquet (17) n'est pas en prise avec la piste de rainure (13a).

8. Unité de déviation selon la revendication 6,
**caractérisée en ce que**
dans le cas d'une opération d'inversion, le cliquet (17) n'est pas en prise avec la piste de came (14a).

9. Unité de déviation selon l'une quelconque des revendications 6 à 8,
**caractérisée en ce que** pour des forces de traction élevées appliquées à la boucle de ceinture de sécurité (1), la roue de blocage (13) peut être tournée jusqu'à venir contre des butées (28) sur l'arbre (14).

10. Unité de synchronisation de boucle de ceinture de sécurité comprenant un dispositif tendeur préventif pour la commande d'opérations de tensionnement, d'inversion et de verrouillage, la boucle de ceinture de sécurité étant réalisée selon l'une quelconque des revendications 1 à 5,
**caractérisée en ce que**
des blocs de verrouillage (21, 22) sont montés de manière à pouvoir tourner l'un par rapport à l'autre à l'intérieur d'un boîtier (8) pour un ressort (7).

11. Unité de synchronisation selon la revendication 10,
**caractérisée en ce que**
les côtés frontaux (32, 33) des blocs de verrouillage (21, 22) sont réalisés sous forme de flancs de dents.
